# EUROPÄISCHE PATENTANMELDUNG

(11) **EP 1 126 246 A1**
(43) Veröffentlichungstag der Anmeldung: **22.08.2001**
(21) Anmeldenummer: 01102867.7
(22) Anmeldetag: 14.02.2001
(51) Int. Cl.: G01D 1/00, G06F 17/40

(54) **Messeinrichtung**

(30) Priorität: 15.02.2000 DE 10006755
(71) Anmelder: ENDRESS + HAUSER CONDUCTA GESELLSCHAFT FÜR MESS UND REGELTECHNIK mbH & Co., 70839 Gerlingen (DE)
(72) Erfinder: Wittmer, Detlev, Dr., 75433 Maulbronn (DE); Babel, Wolfgang, Dr., 71263 Weil der Stadt (DE)
(74) Vertreter: Schäfer, Wolfgang, Dipl.-Ing.

(57) **Zusammenfassung**

Es wird eine Messeinrichtung (1) zur Ermittlung von physikalischen und/oder chemischen Eigenschaften von Gasen, Flüssigkeiten und/oder Feststoffen beschrieben. Die Messeinrichtung (1) ist mit einer Recheneinheit (9) versehen, die mit einem Sensor (2, 3) einer technischen Anlage gekoppelt ist. Die Recheneinheit (9) und der Sensor (2, 3) sind über ein Kommunikationsmedium (5) miteinander verbunden. Die Recheneinheit (9) und ein Gerät (13) der technischen Anlage sind über ein weiteres Kommunikationsmedium (12) miteinander verbunden.

## Beschreibung

Die Erfindung betrifft eine Messeinrichtung zur Ermittlung von physikalischen und/oder chemischen Eigenschaften von Gasen, Flüssigkeiten und/oder Feststoffen mit einer Recheneinheit, die mit einem Sensor einer technischen Anlage gekoppelt ist. Ebenfalls betrifft die Erfindung ein Verfahren zur Ermittlung von physikalischen und/oder chemischen Eigenschaften von Gasen, Flüssigkeiten und/oder Feststoffen, bei dem Messdaten von einem Sensor einer technischen Anlage an eine Recheneinheit weitergegeben werden.

Eine derartige Messeinrichtung und ein derartiges Verfahren sind im Bereich der Messtechnik allgemein bekannt. Insbesondere für die Flüssigkeits- und/oder Gasanalyse können derartige Messeinrichtungen käuflich erworben werden.

Bei einer derartigen Messeinrichtung ist als Sensor beispielsweise ein pH-Wert-Sensor vorgesehen, der in eine zu analysierende Flüssigkeit eintaucht. Die von dem Sensor gemessenen Rohdaten werden von einer elektrischen Schaltung aufbereitet, um danach als Messdaten an die Recheneinheit weitergegeben zu werden. Mit Hilfe der Recheneinheit können die Messdaten beispielsweise auf einem angeschlossenen Monitor angezeigt werden.

Insbesondere bei größeren technischen Anlagen, beispielsweise bei Klärwerken oder dergleichen, besteht häufig ein Wunsch des Anlagenbetreibers darin, dass er sich nicht mehr mit der Aufbereitung der von dem Sensor gelieferten Messdaten beschäftigen will, sondern dass er bereits fertig aufbereitete Messdaten erhalten will. Letztlich will der Anlagenbetreiber damit seinen eigenen Aufwand im Zusammenhang mit den Messdaten vermindern.

Aufgabe der Erfindung ist es, eine Messeinrichtung und ein Verfahren zur Ermittlung von physikalischen und/oder chemischen Eigenschaften von Gasen, Flüssigkeiten und/oder Feststoffen zu schaffen, das einen möglichst geringen Aufwand für den Anlagenbetreiber mit sich bringt.

Diese Aufgabe wird bei einer Messeinrichtung der eingangs genannten Art erfindungsgemäß dadurch gelöst, dass die Recheneinheit und der Sensor über ein Kommunikationsmedium miteinander verbunden sind, und dass die Recheneinheit und ein Gerät der technischen Anlage über ein weiteres Kommunikationsmedium miteinander verbunden sind. Bei einem Verfahren der eingangs genannten Art wird die Aufgabe erfindungsgemäß dadurch gelöst, dass die Messdaten über ein Kommunikationsmedium von dem Sensor an die Recheneinheit übertragen werden, dass von der Recheneinheit aus den Messdaten Daten- und/oder Programmpakete erzeugt werden, und dass die Daten- und/oder Programmpakete über ein weiteres Kommunikationsmedium von der Recheneinheit an ein Gerät der technischen Anlage übertragen werden.

Die Recheneinheit ist dazu vorgesehen, die Messdaten des Sensors aufzubereiten. Diese fertig aufbereiteten Messdaten übermittelt die Recheneinheit dann in Form der Daten-und/oder Programmpakete an das Gerät der technischen Anlage, also letztlich an den Anlagenbetreiber. Durch diese Vorgehensweise ist es möglich, dass der Anlagenbetreiber nichts mit der Aufbereitung der Messdaten zu tun haben muss. Hierzu ist es nur erforderlich, dass die Recheneinheit, auf der die Aufbereitung der Messdaten erfolgt, nicht von dem Anlagenbetreiber, sondern beispielsweise von einem Dienstleistungsunternehmen betrieben wird. Der Anlagenbetreiber erhält dann nur die fertig aufbereiteten Messdaten z.B. von diesem Dienstleistungsunternehmen auf sein Gerät übermittelt und kann diese aufbereiteten Messdaten dann ohne weiteres übernehmen und weiterverarbeiten.

Wesentlich ist bei der erfindungsgemäßen Vorgehensweise, dass einerseits eine Recheneinheit vorhanden ist, die insbesondere zur Aufbereitung der übermittelten Messdaten vorgesehen ist, und dass andererseits ein von der Recheneinheit unabhängiges Gerät in der technischen Anlage vorhanden ist, an das inbesondere die aufbereiteten Messdaten von der Recheneinheit übermittelt werden. Durch diese Trennung der Recheneinheit und des Geräts ist es möglich, dass die Aufbereitung der Messdaten von dem Anlagenbetreiber an ein externes Dienstleistungsunternehmen ausgelagert werden kann, so dass der Anlagenbetreiber selbst keinen Aufwand mehr mit dieser Aufbereitung der Messdaten hat.

Bei vorteilhaften Ausgestaltungen der erfindungsgemäßen Messeinrichtung bzw. des erfindungsgemäßen Verfahrens sind die Recheneinheit und der Sensor über eine Funkverbindung und/oder über eine Telefonverbindung und/oder über eine Internet- und/oder Intranetverbindung und/oder über eine einem Energienetz aufgeprägte Kommunikationsverbindung und/oder dergleichen miteinander verbunden. Die Messdaten werden also per Funk und/oder per Telefon und/oder per Internet und/oder per Intranet und/oder über ein Energienetz und/oder dergleichen übertragen.

Die Verbindung der Recheneinheit und des Sensors über das Kommunikationsmedium bzw. die Übertragung der Messdaten über das Kommunikationsmedium wird also mit Hilfe einer oder mehrerer der vorgenannten Möglichkeiten erreicht. Dabei besitzen die vorgenannten Möglichkeiten den Vorteil, dass sie als solche nicht vollständig neu erstellt werden müssen, sondern zumindest teilweise oder vollständig bereits vorhanden sind. So kann beispielsweise eine Übertragung der Messdaten per Telefon in einfacher Weise dadurch erreicht werden, dass auf beiden Seiten der Telefonstrecke ein Modem oder dergleichen vorgesehen ist, mit dessen Hilfe die Messdaten in das Telefonnetz eingespeist bzw. wieder abgegriffen werden. Derartige Modems sind bekannt und können kostengünstig im Handel erworben werden.

Entsprechendes gilt für die Übertragung der Messdaten über das Internet oder ein Intranet. Hier ist es besonders vorteilhaft, wenn der Sensor als sog. Client und die Recheneinheit als sog. Server eingesetzt wird. Daraus ergibt sich ein minimaler Aufwand für den Aufbau der Internet-Verbindung zwischen dem Sensor und der Recheneinheit.

Ein weiterer Vorteil der vorgenannten Möglichkeiten von Kommunikationsmedien besteht darin, dass beispielsweise bei einer Telefonverbindung oder einer Internetverbindung beliebige Orte miteinander verbunden werden können. Dies bedeutet, dass die Messdaten an jeden beliebigen Ort übertragen werden können. Im Vergleich zu der bekannten, kabelgebundenen Messeinrichtung stellt dies einen wesentlichen Vorteil im Hinblick auf die Flexibilität und Einsetzbarkeit der vorliegenden Erfindung dar.

Vorteilhaft ist es, wenn die Recheneinheit und das Gerät über eine Briefverbindung und/oder über eine Funkverbindung und/oder über eine Telefonverbindung und/oder über eine Internet- und/oder über eine Intranetverbindung und/oder über eine einem Energienetz aufgeprägte Kommunikationsverbindung miteinander verbunden sind. Die Daten- und/oder Programmpakete werden dann per Post und/oder per Funk und/oder per Telefon und/oder per Internet oder per Intranet und/oder über ein Energienetz und/oder dergleichen übertragen.

Auf diese Weise werden - wie bereits erläutert - bereits vorhandene Kommunikationsmedien für die erfindungsgemäße Messeinrichtung ausgenützt. Dies bringt den Vorteil eines einfachen und kostengünstigen Aufbaus der Messeinrichtung mit sich.

Bei einer weiteren vorteilhaften Weiterbildung der erfindungsgemäßen Messeinrichtung sind mehrere Sensoren über einen Multiplexer oder dergleichen mit der Recheneinheit gekoppelt. Dabei können bekannte, handelsübliche Multiplexer bzw. Demultiplexer verwendet werden, die als Hardware-Produkt oder auch als Software-Modul erworben werden können. Mit Hilfe der Multiplexer bzw. Demultiplexer können dann die Messdaten von den Sensoren an die Recheneinheit übertragen werden.

Besonders vorteilhaft ist es, wenn die Recheneinheit durch einen Personalcomputer realisiert ist. Es ist somit keine spezielle Recheneinheit erforderlich, die mit großem Aufwand erstellt werden muss. Stattdessen kann ein handelsüblicher Personalcomputer erworben und verwendet werden. Auf dem Personalcomputer können dann die Programmpakete installiert werden, die beispielsweise für die Auswertung der von den Sensoren erzeugten Messdaten erforderlich sind. Ebenfalls können auf dem Personalcomputer Programmpakete installiert werden, die beispielsweise zur Erzeugung von Listen der Messdaten oder dergleichen geeignet sind.

Der Personalcomputer kann auf einfache Weise beispielsweise mit einem Modem oder dergleichen versehen werden, mit dem die Übertragung der Messdaten von dem bzw. den Sensoren an den Personalcomputer erfolgen kann. Das Modem kann dazu vorgesehen sein, eine Telefonverbindung aufzubauen, ebenfalls ist es jedoch möglich, mit Hilfe des Modems eine Internet- und/oder Intranetverbindung herzustellen.

Durch die Verwendung des Personalcomputers werden somit sämtliche Möglichkeiten eröffnet, die im Zusammenhang mit einem derartigen Personalcomputer bereits vorhanden sind und käuflich erworben werden können. Die erfindungsgemäße Messeinrichtung kann damit auf einfache und kostengünstige Weise erweitert und an die jeweiligen Einsatzbedingungen angepasst werden.

Besonders zweckmäßig ist die Verwendung der erfindungsgemäßen Messeinrichtung bei der Flüssigkeits-und/oder Gasanalyse und/oder bei der Messung von Feuchte in Flüssigkeiten und/oder Gasen.

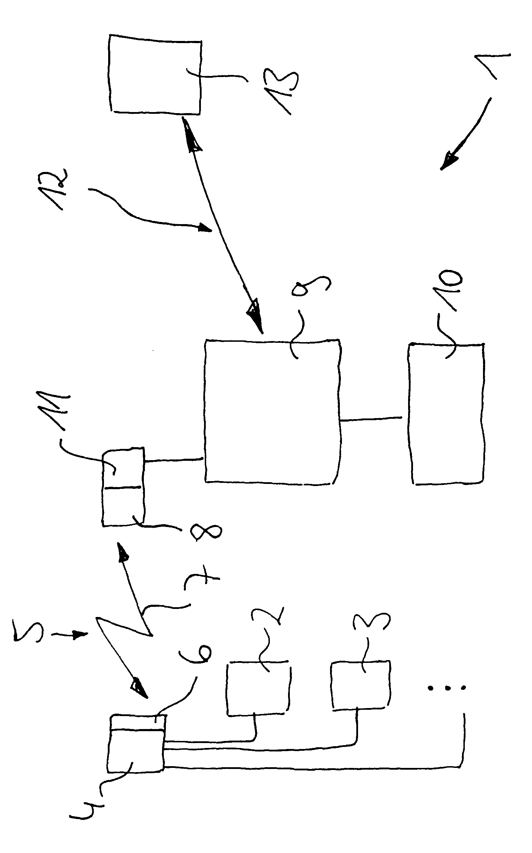

Weitere Merkmale, Anwendungsmöglichkeiten und Vorteile der Erfindung ergeben sich aus der nachfolgenden Beschreibung von Ausführungsbeispielen der Erfindung, die in der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung.

Die einzige Figur der Zeichnung zeigt ein schematisches Blockdiagramm eines Ausführungsbeispiels einer erfindungsgemäßen Messeinrichtung.

In der Figur ist eine Messeinrichtung 1 dargestellt, die zur Ermittlung von physikalischen und/oder chemischen Eigenschaften von Gasen, Flüssigkeiten und/oder Feststoffen geeignet ist. Insbesondere kann die Messeinrichtung 1 bei der Flüssigkeits- und/oder Gasanalyse und/oder bei der Messung von Feuchte in Flüssigkeiten und/oder Gasen verwendet werden.

Die Messeinrichtung 1 ist mit einem oder mit mehreren Sensoren 2, 3 versehen. Bei diesen Sensoren kann es sich um Drucksensoren, Durchflusssensoren, Füllstandssensoren, pH-Wert-Sensoren, Trübungssensoren, Temperatursensoren, Sensoren zur Messung des Chlor- oder Chlordioxidgehalts, Sensoren zur Messung des Sauerstoffgehalts, Leitfähigkeitssensoren und/oder Feuchtesensoren handeln.

Die Sensoren 2, 3 sind vorzugsweise in einer technischen Anlage eines Anlagenbetreibers enthalten. Dabei kann es sich beispielsweise um eine Kläranlage oder dergleichen handeln.

Die Sensoren 2, 3 sind dazu vorgesehen und geeignet, die ihnen jeweils zugeordneten Messdaten zu erzeugen. Ggf. sind den Sensoren 2, 3 elektrische Schaltungen zugeordnet, die zur Umsetzung der von den Sensoren unmittelbar gemessenen Rohdaten in die genannten Messdaten vorgesehen sind. An den Ausgängen der Sensoren 2, 3 werden die jeweiligen Messdaten von den Sensoren 2, 3 zur Verfügung gestellt.

Die Messeinrichtung 1 weist einen Multiplexer 4 auf, an den die Sensoren 2, 3 angeschlossen sind. Der Multiplexer 4 ist dazu vorgesehen, die Messdaten der Sensoren 2, 3 nacheinander abzufragen und in ein gemeinsames Signal umzuformen.

Dem Multiplexer 4 ist ein Kommunikationsmedium 5 nachgeordnet, das ein Bauteil 6, eine Übertragungsstrecke 7 und ein Bauteil 8 aufweist.

Bei dem Kommunikationsmedium 5 kann es sich beispielsweise um eine Funkverbindung handeln. In diesem Fall ist das Bauteil 6 mit einem Sender und das Bauteil 8 mit einem Empfänger versehen. Über die Übertragungsstrecke 7 kann dann das gemeinsame, aus den Messdaten der Sensoren 2, 3 zusammengesetzte Signal des Multiplexers 4 von dem Sender 6 an den Empfänger 8 übertragen werden.

Ebenfalls ist es möglich, dass es sich bei dem Kommunikationsmedium 5 um eine Telefonverbindung oder um eine Internetverbindung handelt. In diesem Fall weisen die Bauteile 6 und 8 jeweils beispielsweise ein Modem oder dergleichen auf. Das gemeinsame, aus den Messdaten der Sensoren 2, 3 zusammengesetzte und von dem Multiplexer 4 erzeugte Signal kann dann über die Übertragungsstrecke 7 zwischen den beiden Modems übertragen werden. Bei einem derartigen Kommunikationsmedium 5 ist praktisch eine weltweite Übertragung möglich.

Handelt es sich bei dem Kommunikationsmedium 5 um eine Telefonverbindung, so können die Messdaten beispielsweise über eine Telefon-Standleitung fortlaufend übertragen werden. Handelt es sich bei dem Kommunikationsmedium um eine Internetverbindung, so erfolgt eine Umwandlung der Messdaten in entsprechende digitale Signale, die dann über das elektronische Netzwerk des Internet übertragen werden.

Während bei einer Telefonverbindung ein sogenannter Echtzeitbetrieb möglich ist, ist dies bei einer Internetverbindung ggf. nicht ohne Weiteres möglich.

Ebenfalls ist es möglich, dass als Kommunikationsmedium 5 eine Kommunikationsverbindung über ein vorhandenes Energienetz aufgebaut wird. In diesem Fall werden die zu übertragenden Signale von den Bauteilen 6 bzw. 8 in hochfrequente Signale umgesetzt, die auf das vorhandene Energienetz aufgeprägt werden. Bei einem derartigen Kommunikationsmedium 5 ist eine Übertragung der Messdaten innerhalb des vorhandenen Energienetzes möglich.

Die Messeinrichtung 1 weist eine Recheneinheit 9, insbesondere einen Personalcomputer auf. Die Recheneinheit 9 ist mit einem Interface 10, insbesondere mit einem Monitor und einer Tastatur versehen. Ebenfalls ist mit der Recheneinheit 9 ein Demultiplexer 11 gekoppelt, der dem Bauteil 8 zugeordnet ist.

Die Recheneinheit 9 ist vorzugsweise bei einem Dienstleistungsunternehmen vorhanden. Die Recheneinheit 9 ist damit nicht Bestandteil der technischen Anlage und ist deshalb nicht dem Anlagenbetreiber zugeordnet.

Die von dem Bauteil 8 empfangenen Signale werden von dem Demultiplexer 11 wieder aufgeschlüsselt und in die Messdaten der Sensoren 2, 3 umgesetzt. In der Recheneinheit 9 liegen somit die Messdaten der Sensoren 2, 3 wieder vor. Diese Messdaten der Sensoren 2, 3 können von der Recheneinheit 9 in beliebiger Weise aufbereitet werden.

Der Multiplexer 4, wie auch der Demultiplexer 11 können als Hardware-Bauteile, wie auch als Software-Module vorhanden sein. Ebenfalls ist es möglich, dass der Multiplexer 4 und der Demultiplexer 11 dazu geeignet sind, eine Übertragung in Gegenrichtung, also von der Recheneinheit 9 zu den Sensoren 2, 3 durchzuführen.

Das Bauteil 8 kann als Steckkarte der Recheneinheit 9, insbesondere des Personalcomputers ausgestaltet sein. Insbesondere bei einer Telefonverbindung oder einer Internetverbindung kann es sich bei dem Bauteil 8 um ein einsteckbares Modem handeln.

Bei dem Multiplexer 4 und dem Bauteil 6 kann es sich um eine prozessorgesteuerte Sendeeinheit handeln, die ggf. auch aus einem Personalcomputer mit einem eingesteckten Modem besteht.

Es versteht sich, dass im Falle des Vorhandenseins nur eines einzigen Sensors kein Multiplexer bzw. Demultiplexer vorhanden sein muss. In diesem Fall ist der einzige Sensor direkt über das Kommunikationsmedium 5 mit der Recheneinheit 9 verbunden. Ebenfalls ist es möglich, dass mehrere Sensoren ohne einen Multiplexer bzw. Demultiplexer jeweils separat über das Kommunikationsmedium 5 mit der Recheneinheit 9 verbunden sind.

Besonders vorteilhaft ist es, wenn die Sensoren 2, 3 als sog. Clients und die Recheneinheit 9 als sog. Server fungieren, und wenn zwischen den Clients und dem Server eine Verbindung über das Internet bzw. ein Intranet aufgebaut wird. Letzteres kann z.B. dadurch realisiert sein, dass der Server mit einer Internet-Domain-Adresse versehen ist, und dass die Clients weder eine Internet-Domain-Adresse, noch eine e-mail-Adresse aufweisen, jedoch dazu geeignet sind, über das Internet zu kommunizieren.

Unter diesen Voraussetzungen ist es möglich, dass einer der Clients sich in vorgegebenen Zeitabständen über das Internet bei dem Server meldet. Hierzu baut der Client --in gleicher Weise wie ein üblicher Internet-Personal- bzw. Homecomputer -- eine Verbindung zu dem Server auf. Der Client wählt sich z.B. über eine Telefonverbindung in das Internet ein und stellt eine Verbindung zu der Internet-Domain-Adresse des Servers her.

Danach übermittelt der Client die von ihm erzeugten Messdaten über die vorhandene Internet-Verbindung an die Internet-Domain-Adresse des Servers und damit an den Server. Die über das Internet von dem Client an den Server übermittelten Messdaten werden von dem Server empfangen und verarbeitet. Insbesondere erfolgt durch den Server eine Aufbereitung der Messdaten und ggf. deren Archivierung.

Solange die Internet-Verbindung zwischen dem Client und dem Server vorhanden ist, ist es ebenfalls möglich, dass der Server Informationen an den Client übermittelt. Bei diesen Informationen kann es sich z.B. um neue Zeitabstände handeln, in denen nachfolgend die Übermittlung der Messdaten erfolgen soll. Ebenfalls kann es sich dabei um die Aufforderung an den Client handeln, bestimmte Prüfroutinen zu durchlaufen und das Prüfergebnis an den Server zu übermitteln. Die über das Internet von dem Server an den Client übermittelten Informationen werden von dem Client empfangen und entsprechend verarbeitet.

Es versteht sich, dass die vorstehend beschriebene Internet-Verbindung zwischen dem Server und einem der Clients auch zwischen dem Server und mehreren Clients aufgebaut werden kann. In diesem Fall werden die zu übertragenden Daten mit Hilfe des Multiplexers 4 und des Demultiplexers 11 verarbeitet. Ebenfalls versteht es sich, dass der Client auch mit einer Internet-Domain-Adresse versehen sein, kann, so dass er auch von der Recheneinheit 9 aus angesprochen werden kann. Dies gilt entsprechend auch für mehrere Sensoren 2, 3, die dann einzeln oder gemeinsam mit Internet-Domain Adressen versehen sein können.

Die Recheneinheit 9 ist über ein weiteres Kommunikationsmedium 12 mit einem Gerät 13 der technischen Anlage verbunden, in der die Sensoren 2, 3 enthalten sind. Damit ist die Recheneinheit 9 über das Kommunikationsmedium 12 letztlich mit dem Anlagenbetreiber der technischen Anlage verbunden.

Bei dem Kommunikationsmedium 12 kann es sich im einfachsten Fall um eine briefliche Verbindung handeln. Ebenfalls ist es möglich, dass es sich um eine Telefonverbindung, eine Internet- und/oder Intranetverbindung, eine Kommunikationsverbindung über ein Energienetz oder dergleichen handelt. Das Gerät 13 des Anlagenbetreibers ist dabei an die jeweilige Ausgestaltung des Kommunikationsmediums 12 angepaßt.

Mit Hilfe des Kommunikationsmediums 12 können Daten-und/oder Programmpakete per Post und/oder per Funk und/oder per Telefon und/oder per Internet und/oder per Intranet und/oder über das Energienetz von der Recheneinheit 9 zu dem Gerät 13 des Anlagenbetreibers bzw. in Gegenrichtung übertragen werden. Bei den genannten Daten- und/oder Programmpaketen kann es sich um aufbereitete Messdaten, beispielsweise um Listen von Messdaten oder dergleichen handeln, wie auch um Wartungshinweise oder um Alarmierungen. Umgekehrt kann es sich um Mitteilungen handeln, die von dem Anlagenbetreiber in die Recheneinheit 9 eingespielt werden, und die damit letztlich an das Dienstleistungsunternehmen gerichtet sind.

Handelt es sich bei dem Kommunikationsmedium 12 um eine Telefonverbindung und/oder um eine Internetverbindung, so können die dazu erforderlichen Modems wieder als Steckkarten in die Recheneinheit 9 und in das Gerät 13 eingesteckt werden.

Im Betrieb der beschriebenen Messeinrichtung 1 werden die von den Sensoren 2, 3 erzeugten Messdaten über das Kommunikationsmedium 5 an die Recheneinheit 9 übertragen. Dort werden die Messdaten aufbereitet bzw. weiterverarbeitet. Diese Aufbereitung und Weiterverarbeitung in der Recheneinheit 9 erfolgt durch das Dienstleistungsunternehmen, dem die Recheneinheit 9 zugeordnet ist. Dieses Dienstleistungsunternehmen führt also die gesamte Verarbeitung der von den Sensoren 2, 3 des Anlagenbetreibers gewonnen Messdaten für diesen Anlagenbetreiber durch.

Von der Recheneinheit 9 erzeugte Daten- und/oder Programmpakete werden dann über das Kommunikationsmedium 12 an das Gerät 13 des Anlagenbetreibers übermittelt. Dem Anlagenbetreiber liegen nunmehr sämtliche Messdaten seiner Sensoren 2, 3 in aufbereiteter Form vor. Der Anlagenbetreiber kann damit diese Messdaten ohne weiteres z.B. in einer Steuerung und/oder Regelung seiner technischen Anlage, in der die Sensoren 2, 3 enthalten sind, weiterverarbeiten.

Ebenfalls ist es möglich, dass selbst diese Steuerung und/oder Regelung der technischen Anlage des Anlagenbetreibers auf der Grundlage der ermittelten Messdaten von dem Dienstleistungsunternehmen durchgeführt wird. In diesem Fall erhält der Anlagenbetreiber letztlich nur noch Listen udgl. über das Kommunikationsmedium 12, mit denen das Dienstleistungsunternehmen über den Betrieb der technischen Anlage berichtet.

## Patentansprüche

1. Messeinrichtung (1) zur Ermittlung von physikalischen und/oder chemischen Eigenschaften von Gasen, Flüssigkeiten und/oder Feststoffen mit einer Recheneinheit (9), die mit einem Sensor (2, 3) einer technischen Anlage gekoppelt ist, **dadurch gekennzeichnet,** dass die Recheneinheit (9) und der Sensor (2, 3) über ein Kommunikationsmedium (5) miteinander verbunden sind, und dass die Recheneinheit (9) und ein Gerät (13) der technischen Anlage über ein weiteres Kommunikationsmedium (12) miteinander verbunden sind.

2. Messeinrichtung (1) nach Anspruch 1, dadurch gekennzeichnet, dass die Recheneinheit (9) und der Sensor (2, 3) über eine Funkverbindung und/oder über eine Telefonverbindung und/oder über eine Internet-und/oder Intranetverbindung und/oder über eine einem Energienetz aufgeprägte Kommunikationsverbindung und/oder dergleichen miteinander verbunden sind.

3. Messeinrichtung (1) nach einem der Ansprüche 1 oder 2, dadurch gekennzeichnet, dass die Recheneinheit (9) und das Gerät (13) über eine Briefverbindung und/oder über Funkverbindung und/oder über eine Telefonverbindung und/oder über eine Internet- und/oder Intranetverbindung und/oder über eine einem Energienetz aufgeprägte Kommunikationsverbindung und/oder dergleichen miteinander verbunden sind.

4. Messeinrichtung (1) nach einem der vorstehenden Ansprüche, dadurch gekennzeichnet, dass die Recheneinheit (9) nicht der technischen Anlage angehört.

5. Messeinrichtung (1) nach einem der vorstehenden Ansprüche, dadurch gekennzeichnet, dass mehrere Sensoren (2, 3) über einen Multiplexer (4, 11) odgl. mit der Recheneinheit (9) gekoppelt sind.

6. Messeinrichtung (1) nach einem der vorstehenden Ansprüche, dadurch gekennzeichnet, dass die Recheneinheit (9) durch einen Personalcomputer realisiert ist.

7. Messeinrichtung (1) nach einem der vorstehenden Ansprüche, gekennzeichnet, durch die Verwendung bei der Flüssigkeits- und/oder Gasanalyse und/oder bei der Messung von Feuchte in Flüssigkeiten und/oder Gasen.

8. Messeinrichtung (1) nach einem der vorstehenden Ansprüche, gekennzeichnet, durch die Verwendung von einem oder mehreren der nachstehenden Sensoren: Drucksensor, Durchflußsensor, Füllstandssensor, pH-Wert-Sensor, Trübungssensor, Temperatursensor, Sensor zur Messung des Chlor- oder Chlordioxigehalts, Sensor zur Messung des Sauerstoffgehalts, Leitfähigkeitssensor, Feuchtesensor.

9. Verfahren zur Ermittlung von physikalischen und/oder chemischen Eigenschaften von Gasen, Flüssigkeiten und/oder Feststoffen, bei dem Messdaten von einem Sensor (2, 3) einer technischen Anlage an eine Recheneinheit (9) weitergegeben werden, dadurch gekennzeichnet, dass die Messdaten über ein Kommunikationsmedium (5) von dem Sensor (2, 3) an die Recheneinheit (9) übertragen werden, dass von der Recheneinheit (9) aus den Messdaten Daten- und/oder Programmpakete erzeugt werden, und dass die Daten-und/oder Programmpakete über ein weiteres Kommunikationsmedium (12) von der Recheneinheit (9) an ein Gerät (13) der technischen Anlage übertragen werden.

10. Verfahren nach Anspruch 9, dadurch gekennzeichnet, dass die Messdaten per Funk und/oder per Telefon und/oder per Internet und/oder per Intranet und/oder über ein Energienetz und/oder dergleichen übertragen werden.

11. Verfahren nach einem der Ansprüche 9 oder 10, dadurch gekennzeichnet, dass die Daten- und/oder Programmpakete per Brief und/oder per Funk und/oder per Telefon und/oder per Internet und/oder per Intranet und/oder über ein Energienetz und/oder dergleichen übertragen werden.

12. Verfahren nach einem der Ansprüche 9 bis 11, dadurch gekennzeichnet, dass die Recheneinheit (9) nicht von dem Anlagenbetreiber der technischen Anlage betrieben wird.

13. Verfahren nach Anspruch 12, dadurch gekennzeichnet, dass die Recheneinheit (9) von einem Dienstleistungsunternehmen betrieben wird.
